# FASCICULE DE BREVET EUROPEEN

(11) **EP 4 402 020 B1**
(45) Date de publication et mention de la délivrance du brevet: **28.01.2026**
(21) Numéro de dépôt: 22757313.6
(22) Date de dépôt: 22.07.2022
(51) Int. Cl.: B60Q 1/10, B60Q 1/50

(54) **SYSTÈMES DE PROJECTION D'IMAGES SUR LE SOL**
SYSTEME ZUR PROJEKTION VON BILDERN AUF DEN BODEN
SYSTEMS FOR PROJECTING IMAGES ONTO THE GROUND

(30) Priorité: 14.09.2021 FR 2109638
(43) Date de publication de la demande: 24.07.2024
(73) Titulaire: Stellantis Auto SAS, 78300 Poissy (FR)
(72) Inventeur: BERREUR, Jean Charles, 94800 VILLEJUIF (FR)
(74) Mandataire: ESIP
(86) Numéro de dépôt international: PCT/FR2022/051474
(87) Numéro de publication internationale: WO 2023/041855

(56) Documents cités:
- WO-A1-2020/261642
- FR-A1- 3 101 393
- US-A1- 2015 298 598
- US-A1- 2018 118 099
- US-A1- 2018 126 897
- US-A1- 2020 311 442

## Description

La présente invention revendique la priorité de la demande française 2109638 déposée le 14.09.2021.

La présente invention a trait aux fonctions d'accompagnement lumineux de l'utilisateur lors des phases d'approche ou d'éloignement de son véhicule automobile, et plus particulièrement aux systèmes de projection d'images sur le sol à proximité du véhicule automobile. La présente invention concerne aussi les véhicules automobiles équipés de tels systèmes.

Il est connu dans l'art antérieur des dispositifs de projection disposés dans la partie basse des rétroviseurs extérieurs ou dans les bas de caisse du véhicule automobile qui sont configurés pour projeter une image sur le sol aux abords latéraux du véhicule automobile. Cette projection se produit généralement lors de la décondamnation à distance du véhicule automobile ou lorsqu'on le quitte.

Ces dispositifs de projection comprennent des lentilles optiques réglées de façon à obtenir la bonne taille et la bonne netteté de l'image projetée sur un plan de projection de référence (ou sur un sol de référence). Ce plan de projection de référence coïncide avec le sol lorsque le véhicule automobile est à sa hauteur nominale par rapport à la route.

Cependant, il arrive souvent que la hauteur de la caisse du véhicule s'écarte de sa valeur de référence, notamment sous l'effet d'une charge (au niveau du coffre, des sièges arrières, sur le toit, ou à l'arrière tel qu'un porte-vélo) que le véhicule automobile supporte. Il en résulte une modification de la disposition des dispositifs de projection par rapport au sol de référence qui, pour conserver la netteté et la précision de l'image projetée selon le réglage d'origine, doit être accompagnée d'un réajustement optique des dispositifs de projection. Néanmoins, un tel réglage est souvent inaccessible à l'utilisateur et, de toute façon, incommode.

On connait du document FR3101393 B1 un procédé d'appairage entre module d'éclairage pour un véhicule automobile comprenant une source lumineuse matricielle regroupant une pluralité de sources lumineuses élémentaires, et un module de commande d'un véhicule automobile. On connait du document US20180126897 A1 un dispositif de commande d'assistance de conducteur destiné à aider la conduite d'un véhicule hôte en commandant la projection d'une image lumineuse depuis le véhicule hôte sur la surface de la route à l'avant. On connait du document WO2020/261642 A1 un dispositif de commande d'affichage permettant de commander la position d'affichage d'une image dans une unité de projection d'image (30) qui projette une image sur un sujet d'affichage d'un objet mobile. On connait du document US20200311442 A1 un dispositif de détection d'orientation servant à détecter l'orientation d'un véhicule. On connait du document US20180118099 A1 un dispositif de projection d'image video. On connait du document US 2015/298598 A un dispositif de projection d'au moins une image à proximité du véhicule automobile lors des phases d'approche ou d'éloignement d'un utilisateur dudit véhicule automobile, dans lequel le dispositif de projection est configuré pour projeter au moins une image sur un sol à au moins un abord latéral dudit véhicule automobile.

Un objet de la présente invention est de permettre l'obtention, quelle que soit la disposition de la caisse du véhicule automobile par rapport au sol, une projection nette et précise sur le sol des motifs d'accompagnement lumineux de l'utilisateur.

A cet effet, il est proposé, un système de projection tel que défini dans la revendication indépendante 1.

Des réalisations préférées sont définies dans les revendications dépendantes.

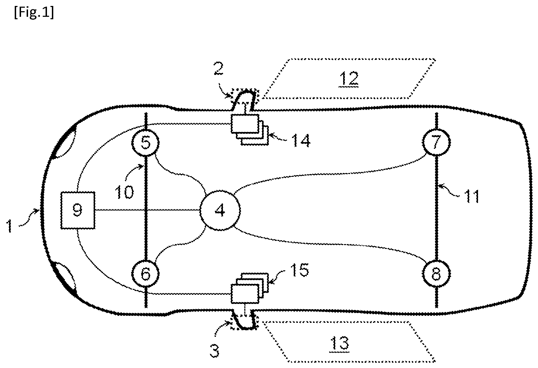

D'autres caractéristiques et avantages de l'invention apparaîtront plus clairement et de manière concrète à la lecture de la description ci-après de modes de réalisation, laquelle est faite en référence à la figure [Fig. 1] qui illustre schématiquement un véhicule automobile comprenant un système de projection d'images sur le sol selon divers modes de réalisation.

En se référant à la figure 1, il est affiché un véhicule **1** automobile pourvu d'un ou plusieurs dispositifs **2-3** de projection. Chacun de ces dispositifs **2-3** de projection est apte à projeter une image sur le sol à proximité du véhicule **1** automobile, notamment dans une zone **12-13** de projection correspondante à un abord latéral du véhicule **1** automobile.

Pour cela, chacun des dispositifs **2-3** de projection comprend, de manière connue, une source de lumière (telle qu'une ou plusieurs diodes électroluminescentes) et une ou plusieurs lentilles optiques de focalisation et de projection. Les dispositifs **2-3** de projection sont, dans un mode de réalisation, des mini-projecteurs vidéo ou des micro-projecteurs.

Chacun des dispositifs **2-3** de projection est pourvu d'une pluralité d'images **14-15.** Ces images peuvent comporter des motifs de type texte, des logos, des pictogrammes ou, plus généralement, un contenu visuel fixe tels que des supports transparents sous la forme de diapositives ou animé telles que des images vidéo. Le dispositif **2-3** de projection est apte à projeter l'une quelconque des images **14-15** à proximité du véhicule **1** automobile dans la zone **12-13** de projection correspondante.

Par ailleurs, le véhicule **1** automobile comprend, en outre, un correcteur **4** d'assiette, aussi couramment appelé régulateur de hauteur, configuré pour contrôler l'assiette du véhicule **1** automobile (ou la hauteur moyenne de la caisse du véhicule **1** automobile). Grâce à des capteurs **5-8** d'assise disposés sur le train **10** avant et sur le train **11** arrière du véhicule **1** automobile, ce correcteur **4** d'assiette permet de détecter un écart d'assiette supérieur à une valeur prédéfinie par rapport à une assiette de référence. L'assiette de référence généralement définie par le constructeur est, dans un mode de réalisation, celle du véhicule **1** automobile à vide (sa hauteur à vide). Une variation de l'assiette (par roulis et/ou par tangage) du véhicule **1** automobile par rapport à l'assiette de référence peut se produire sous l'effet d'une charge supportée par le véhicule **1** automobile ou, plus généralement, de toute variation de la masse suspendue par rapport à une masse de référence de la caisse du véhicule **1** automobile.

Au moins un premier capteur **5, 6** d'assise disposé sur le train **10** avant du véhicule **1** automobile et au moins un deuxième capteur **7, 8** d'assise disposé sur le train **11** arrière du véhicule **1** automobile permettent de mesurer ou d'évaluer la hauteur du bas de caisse du véhicule **1** automobile par rapport au sol. En utilisant les données recueillies par les capteurs **5-8** d'assise, le correcteur **4** d'assiette calcule un écart entre l'assiette actuelle du véhicule **1** automobile et l'assiette de référence qui lui est associée (ou, de manière équivalente, la position ou la hauteur du bas de caisse du véhicule **1** automobile par rapport au sol).

L'écart entre l'assiette du véhicule **1** automobile et son assiette de référence calculé par le correcteur **4** d'assiette est communiqué à un calculateur **9** configuré pour sélectionner, parmi la pluralité d'images **14-15,** une image à projeter par le dispositif **2, 3** de projection, l'image sélectionnée étant associée à l'écart calculé par le correcteur **4** d'assiette.

La pluralité d'images **14-15** comprend, dans un mode de réalisation, des images différentes les unes des autres, respectivement, associées à différents écarts possibles entre l'assiette du véhicule **1** automobile et l'assiette de référence qui lui est associée. Plus généralement, la pluralité d'images **14-15** comprend au moins une première image associée à un premier écart calculé par le correcteur **4** d'assiette et une deuxième image associée à un deuxième écart calculé par le correcteur **4** d'assiette, le deuxième écart étant différent du premier écart. La première image est, par exemple, associée à un écart sensiblement nul entre l'assiette actuelle du véhicule **1** automobile et l'assiette de référence. La deuxième image est, par exemple, associée à un écart sensiblement égal à une valeur prédéfinie non nulle. Le dispositif **2, 3** de projection est configuré pour projeter de façon nette et précise la première image associée à un écart sensiblement nul entre l'assiette du véhicule **1** automobile et son assiette de référence. La deuxième image est obtenue par une déformation optique (ou une distorsion optique) de la première image. Cette déformation optique est choisie de façon à compenser une modification de la disposition du dispositif **2, 3** de projection par rapport au plan de projection de référence, c.à.d. par rapport au sol de référence où l'écart entre l'assiette du véhicule **1** automobile et l'assiette de référence est sensiblement nul.

Il en résulte, avantageusement, une projection nette et précise de l'image associée à l'écart calculé par le correcteur **4** d'assiette, sans avoir besoin de réajuster les lentilles du dispositif **2, 3** de projection. Autrement dit, la sélection de l'image à projeter en fonction de l'écart entre l'assiette du véhicule **1** automobile et son assiette de référence permet un réglage automatique de la netteté de la projection sur le sol sans avoir à manipuler le dispositif **2, 3** de projection. Ainsi, que le bas de caisse du véhicule **1** automobile (ou, de manière équivalente, le dispositif **2, 3** de projection) soit à sa hauteur/disposition nominale ou non par rapport au sol, l'image projetée sur le sol est parfaitement nette.

Dans un mode de réalisation, lorsque le véhicule **1** automobile a une disposition par rapport au sol différente de celle utilisée comme référence pour le réglage/étalonnage optique du dispositif **2, 3** de projection, l'image à projeter est choisie en fonction de l'écart entre la disposition actuelle du véhicule **1** automobile et celle de référence. L'image à projeter est obtenue par une déformation ou une distorsion réversible (telle qu'une anamorphose) d'une image de référence associée à la disposition de référence du dispositif **2, 3** de projection par rapport au sol de façon à obtenir une image projetée nette et précise.

Par exemple, la pluralité d'images **14-15** comprend l'image d'un motif à projeter lorsque le véhicule **1** automobile est à sa hauteur de référence et une suite d'images obtenues en appliquant sur ce motif des déformations prédéfinies associées, respectivement, à des écarts prédéfinis non nuls entre la hauteur du véhicule **1** automobile et ladite hauteur de référence.

Dans un mode de réalisation, le calculateur **9** est apte à générer une image à projeter par le dispositif **2, 3** de projection en appliquant à une certaine image de la pluralité d'images **14-15** une transformation prédéfinie (notamment, une déformation optique décrite par une transformation mathématique) associée à un écart d'assiette calculé par le correcteur **4** d'assiette. Par exemple, le calculateur **9** est configuré pour générer à la volée une image à projeter en appliquant à une image de référence une transformation prédéfinie associée à l'écart d'assiette calculé par le correcteur **4** d'assiette.

Le correcteur **4** d'assiette est configuré pour qu'il soit activé lors du déclenchement des dispositifs **12-13** de projection pour les fonctions d'accueil et d'éloignement lumineux. Par exemple, dès que le boitier électronique du véhicule **1** automobile détecte le badge d'accès à distance que porte l'utilisateur, il active les dispositifs **2-3** de projection et le correcteur **4** d'assiette de façon à permettre le fonctionnement du système de projection décrit ci-dessus pour la phase d'approche de l'utilisateur. Pour la phase d'éloignement, le correcteur **4** d'assiette du véhicule **1** automobile est maintenu activé jusqu'à ce que le badge d'accès à distance que porte l'utilisateur soit éloigné d'au moins une distance prédéfinie (par exemple, cinq mètres) du véhicule **1** automobile.

Avantageusement, les modes de réalisation décrits ci-dessus améliorent la netteté et la précision des images projetées à proximité du véhicule **1** automobile lors des phases d'accompagnement lumineux de l'utilisateur sans surcoût parce qu'ils ne nécessitent que très peu d'adaptations, les correcteurs d'assiette étant souvent présents dans les véhicules automobiles pourvus de fonctions d'accompagnement lumineux.

## Revendications

1. Système de projection destiné à équiper un véhicule (**1**) automobile pour une projection d'au moins une image à proximité du véhicule (**1**) automobile lors des phases d'approche ou d'éloignement d'un utilisateur dudit véhicule automobile, ce système comprenant
- un dispositif (**2, 3**) de projection pourvu d'une pluralité d'images (**14, 15**), dispositif configuré pour projeter au moins une image sur un sol à au moins un abord latéral dudit véhicule automobile ; **caractérisé en ce que** ledit système comprend:
- un correcteur (**4**) d'assiette apte à calculer un écart entre l'assiette du véhicule (**1**) automobile et une assiette de référence associée audit véhicule **(1)** automobile;
- un calculateur **(9)** configuré pour sélectionner, parmi ladite pluralité d'images **(14, 15),** une image à projeter par le dispositif (**2**, **3**) de projection, l'image sélectionnée étant associée à l'écart calculé par le correcteur **(4)** d'assiette ;
le correcteur (**4**) d'assiette est pourvu d'au moins un premier capteur (**5, 6**) d'assise disposé sur le train (**10**) avant du véhicule (**1**) automobile et d'au moins un deuxième capteur (**7, 8**) d'assise disposé sur le train (**11**) arrière du véhicule (**1**) automobile, le premier capteur (**5, 6**) d'assise et le deuxième capteur (**7, 8**) d'assise étant configurés pour évaluer la hauteur du bas de caisse du véhicule (**1**) automobile par rapport au sol.

2. Système selon la revendication 1 , **caractérisé en ce que** ladite pluralité d'images (**14, 15**) comprend au moins une première image associée à un premier écart calculé par le correcteur (**4**) d'assiette et une deuxième image associée à un deuxième écart calculé par le correcteur **(4)** d'assiette, le deuxième écart étant différent du premier écart

3. Système selon la revendication précédente, **caractérisé en ce que** le premier écart est sensiblement nul.

4. Système selon la revendication 2 ou 3, **caractérisé en ce que** le deuxième écart est sensiblement égal à une valeur prédéfinie non nulle

5. Système selon l'une quelconque des revendications 2 à 4, **caractérisé en ce que** la deuxième image est obtenue par une déformation optique de la première image.

6. Système selon l'une quelconque des revendications précédentes, **caractérisé en ce que** le calculateur (**9**) est apte à générer une image à projeter par le dispositif (**2, 3**) de projection en appliquant à une image de la pluralité d'images (**14, 15**) une transformation prédéfinie associée à un écart calculé par le correcteur (**4**) d'assiette.

7. Véhicule (**1**) automobile comprenant le système de l'une quelconque des revendications précédentes.

8. Véhicule (**1**) automobile selon la revendication précédente, **caractérisé en ce que** le correcteur (**4**) d'assiette est configuré pour qu'il soit activé lors du déclenchement du dispositif (**2, 3**) de projection.

## Patentansprüche

1. Ein Projektionssystem zur Ausstattung eines Kraftfahrzeugs (1) mit der Möglichkeit, während der Annäherungs- oder Abfahrtsphase eines Benutzers mindestens ein Bild in der Nähe des Kraftfahrzeugs (1) zu projizieren. Das System umfasst: - eine Projektionsvorrichtung (2, 3) mit mehreren Bildern (14, 15), die so konfiguriert ist, dass sie mindestens ein Bild auf den Boden projiziert, und zwar bei mindestens einer seitlichen Annäherung an das Kraftfahrzeug. Das System zeichnet sich dadurch aus, dass es Folgendes umfasst:
- einen Nivellierungskorrektor (4), der die Differenz zwischen der Höhe des Kraftfahrzeugs (1) und einer dem Kraftfahrzeug (1) zugeordneten Referenzhöhe berechnet ;
- einen Computer (9), der so konfiguriert ist, dass er aus den mehreren Bildern (14, 15) das vom Projektionsgerät (2, 3) zu projizierende Bild auswählt, wobei das ausgewählte Bild der vom Nivellierungskorrektor (4) berechneten Differenz zugeordnet ist.
Der Fahrhöhenkorrektor (4) ist mit mindestens einem ersten Fahrhöhensensor (5, 6) an der Vorderachse (10) des Kraftfahrzeugs (1) und mindestens einem zweiten Fahrhöhensensor (7, 8) an der Hinterachse (11) des Kraftfahrzeugs (1) ausgestattet, wobei der erste Fahrhöhensensor (5, 6) und der zweite Fahrhöhensensor (7, 8) so konfiguriert sind, dass sie die Höhe des Unterbodens des Kraftfahrzeugs (1) relativ zum Boden erfassen.

2. System nach Anspruch 1, **dadurch gekennzeichnet, dass** die genannte Vielzahl von Bildern (14, 15) mindestens ein erstes Bild umfasst, das einer ersten Abweichung zugeordnet ist, die vom Trimmkorrektor (4) berechnet wird, und ein zweites Bild, das einer zweiten Abweichung zugeordnet ist, die vom Trimmkorrektor (4) berechnet wird, wobei die zweite Abweichung von der ersten Abweichung verschieden ist.

3. System nach dem vorhergehenden Anspruch, **dadurch gekennzeichnet, dass** die erste Abweichung im Wesentlichen null ist.

4. System nach Anspruch 2 oder 3, **dadurch gekennzeichnet, dass** die zweite Abweichung im Wesentlichen gleich einem von Null verschiedenen, vordefinierten Wert ist.

5. System nach einem der Ansprüche 2 bis 4, **dadurch gekennzeichnet, dass** das zweite Bild durch eine optische Deformation des ersten Bildes erzeugt wird.

6. System nach einem der vorhergehenden Ansprüche, **dadurch gekennzeichnet, dass** der Computer (9) in der Lage ist, ein Bild zu erzeugen, das von der Projektionsvorrichtung (2, 3) projiziert werden soll, indem er auf ein Bild aus der Vielzahl der Bilder (14, 15) eine vordefinierte Transformation anwendet, die mit einer durch den Nivellierungskorrektor (4) berechneten Abweichung verbunden ist.

7. Kraftfahrzeug (1) umfassend das System eines der vorhergehenden Ansprüche.

8. Kraftfahrzeug (1) nach dem vorhergehenden Anspruch, **dadurch gekennzeichnet, dass** der Fahrhöhenkorrektor (4) so konfiguriert ist, dass er aktiviert wird, wenn die Projektionsvorrichtung (2, 3) ausgelöst wird.

## Claims

1. A projection system intended to equip a motor vehicle (1) for projecting at least one image in the vicinity of the motor vehicle (1) during the approach or departure phases of a user of said motor vehicle, this system comprising
- a projection device (2, 3) provided with a plurality of images (14, 15), a device configured to project at least one image onto a ground at at least one lateral approach to said motor vehicle; **characterized in that** said system comprises: - a leveling corrector (4) capable of calculating a difference between the level of the motor vehicle (1) and a reference level associated with said motor vehicle (1);
- a computer (9) configured to select, from said plurality of images (14, 15), an image to be projected by the projection device (2, 3), the selected image being associated with the difference calculated by the leveling corrector (4);
the ride height corrector (4) is provided with at least one first ride height sensor (5, 6) disposed on the front axle (10) of the motor vehicle (1) and at least one second ride height sensor (7, 8) disposed on the rear axle (11) of the motor vehicle (1), the first ride height sensor (5, 6) and the second ride height sensor (7, 8) being configured to evaluate the height of the underbody of the motor vehicle (1) relative to the ground.

2. System according to claim 1, **characterized in that** said plurality of images (14, 15) comprises at least a first image associated with a first deviation calculated by the trim corrector (4) and a second image associated with a second deviation calculated by the trim corrector (4), the second deviation being different from the first deviation.

3. System according to the preceding claim, **characterized in that** the first deviation is substantially zero.

4. System according to claim 2 or 3, **characterized in that** the second deviation is substantially equal to a non-zero predefined value.

5. System according to any one of claims 2 to 4, **characterized in that** the second image is obtained by an optical deformation of the first image.

6. System according to any one of the preceding claims, **characterized in that** the computer (9) is capable of generating an image to be projected by the projection device (2, 3) by applying to an image of the plurality of images (14, 15) a predefined transformation associated with a deviation calculated by the leveling corrector (4).

7. Vehicle (1) comprising the system of any one of the preceding claims.

8. Vehicle (1) according to the preceding claim, **characterized in that** the ride height corrector (4) is configured to be activated when the projection device (2, 3) is triggered.
